# EUROPÄISCHE PATENTSCHRIFT

(11) **EP 2 435 531 B1**
(45) Veröffentlichungstag und Bekanntmachung des Hinweises auf die Patenterteilung: **30.10.2013**
(21) Anmeldenummer: 10719331.0
(22) Anmeldetag: 06.05.2010
(51) Int. Cl.: C09K 9/02, G02F 1/15

(54) **ELEKTROCHROME FORMULIERUNG, HERSTELLUNGSVERFAHREN DAZU UND ELEKTROCHROMES ORGANISCHES BAUELEMENT**
ELECTROCHROMIC FORMULATION, METHOD FOR THE PRODUCTION THEREOF, AND ORGANIC ELECTROCHROMIC COMPONENT
FORMULATION ÉLECTROCHROME, PROCÉDÉ DE PRÉPARATION ET COMPOSANT ORGANIQUE ÉLECTROCHROME

(30) Priorität: 29.05.2009 DE 102009023303
(43) Veröffentlichungstag der Anmeldung: 04.04.2012
(73) Patentinhaber: Siemens Aktiengesellschaft, 80333 München (DE)
(72) Erfinder: KANITZ, Andreas, 91315 Höchstadt (DE); MALEIKA, Marek, 90766 Fürth (DE); ROTH, Wolfgang, 91080 Uttenreuth (DE)
(86) Internationale Anmeldenummer: PCT/EP2010/056176
(87) Internationale Veröffentlichungsnummer: WO 2010/136314

(56) Entgegenhaltungen:
- EP-A2- 1 156 098
- DE-A1-102007 023 747
- JP-A- 57 057 778
- KIM Y ET AL: "Complementary electrochromic windows with conductive nano-composite thin films" CURRENT APPLIED PHYSICS, NORTH-HOLLAND LNKD- DOI:10.1016/J.CAP.2007.04.020, Bd. 8, Nr. 6, 1. Oktober 2008 (2008-10-01) , Seiten 752-754, XP022941832 ISSN: 1567-1739 [gefunden am 2008-07-21]

## Beschreibung

Die Erfindung betrifft Formulierungen und deren Anwendung in organisch basierten elektrochromen Bauteilen, beispielsweise zur Herstellung von Zustandsanzeigen, deren geschalteter Zustand möglichst lange stromlos erhalten bleibt. Diese elektrochromen organisch basierten Formulierungen zeichnen sich in der Anzeige durch eine hohe Bistabilität aus und können auch je nach Ausführung nach einmaliger Beschaltungsdauer irreversibel im geschalteten Farbzustand bleiben.

Elektrochrome Displays auf Basis organischer Materialien umfassen im Normalfall eine aktive elektrochrome Schicht, die sich im Falle eines Displays zwischen senkrecht zueinander angeordneten Elektroden befindet. Wesentliche Bestandteile der aktiven Schicht sind ein Redox-System und ein elektrochromer Farbstoff. Durch das Anlegen einer Spannung wird das Konzentrationsverhältnis der Redox-Partner zueinander im Material verschoben. Bei dieser Reaktion werden im Material Protonen und/oder Ionen freigesetzt oder gebunden, welches sich auf den pH-Wert auswirkt. Wenn eine Spannung an das Material angelegt wird, dann läuft die Verschiebung des Gleichgewichts der Redox-Partner an den beiden Elektroden in entgegen gesetzter Richtung. Dies führt dazu, dass beispielsweise an der einen Elektrode der pH-Wert steigt, während er an der Gegenelektrode sinkt. Über einen pH-Farbstoff wird die Änderung des pH-Wertes dann in eine Farbänderung des Materials umgesetzt und das Anlegen der Spannung sichtbar gemacht.

Aus WO 02/075441A2 und WO 02/075442 A1 ist bekannt, dass sich zwischen den Elektroden eine pastöse Formulierung, die das elektrochrome System darstellt, befindet. Die Zusammensetzung dieses elektrochromen Systems umfasst als essentielle Bestandteile ein Polymer als Festelektrolyt, ein Leitsalz, ein Redox-System, TiO₂ als Weißpigment, ein Lösungsmittel und einen Farbstoff. Dieser ist in der Regel ein pH-Indikator.

Ein weiteres Prinzip elektrochrome Displays zu verwirklichen besteht darin, die Farbänderung nicht durch die Änderung des pH-Wertes im Display herbeizuführen, sondern die ohnehin stattfindenden Redoxprozesse zu nutzen, um kontrastreiche Farbwechsel durch die Bildung reduktiver und/oder oxidativer Zustände in geeigneten Materialien zu erzeugen. Dabei sind vor allem die sogenannten Viologene und Polythiophene als Materialklassen bekannt geworden. Beispiele in der Literatur hierfür sind in M. O. M. Edwards, Appl. Phys. Lett. 2005, 86(7) und Helmut W. Heuer, Rolf Wehrmann, Stephan Kirchmeyer, Adv. Funct. Mater. 2002, 89.

In der Regel werden elektrochrom aktive Formulierungen ange-strebt, die beim Anlegen einer Spannung schnell den Farbzustand wechseln und im spannungslosen Zustand auch wieder schnell in den Grundzustand zurückkehren. Dieses Verhalten ist für Displays erwünscht. Für Zustandsanzeigen, z. B. ein/aus, ist es vorteilhaft, Formulierungen zu haben, die nach Erreichen des geschalteten Zustands ohne weitere Spannung möglichst lange oder immer in diesem Zustand verbleiben. Solche elektrochromen Systeme sind zwar bekannt, z.B. elektrochrome Spiegel oder Ankerviologene auf Titanoxidkristallen a) L. Walder, M. Möller, Patent EP 1 271 227, 2003, b) M. Möller, S. Asaftei, D. Corr, M. Ryan, L. Walder, Adv. Mater. 2004, 16, 1558. Diese Systeme erfordern allerdings großen technologischen Aufwand so dass einfache Displays/Anzeigen zu teuer werden.

Aus der EP 1 156 098 ist eine elektrochrome Formulierung bekannt, die eine leicht gelbliche Verfärbung in stromlosem Zustand zeigt, in den sie auch nach erfolgter Schaltung bei Wiederkehr des stromlosen Zustands wieder zurückfällt.

Aus der Veröffentlichung von Kim Y ET AL: "Complementary electgrochromic windows with conductive nano-composite thin films" in Current applied Physics, North-Holland LNKD-D01 Oktober 2008 Seiten 752-754, ist ebenfalls eine elektrochrom schaltbare Verbindung mit kathodisch schaltbarem PEDOT und anodisch schaltbarem polyaniline-N- butylsulfonate (PANBS) offenbart.

Mit geringem Aufwand lassen sich aus den von der Anmelderin bereits zum Patent angemeldeten elektrochromen Systemen irreversibel schaltende, bekannt aus der DE 10 2006 015 056, und bistabile, bekannt aus der DE 10 2006 045 307, elektrochrome Bauteile herstellen.

Aufgabe der vorliegenden Erfindung ist die Entwicklung elekt-rochrom aktiver bistabiler Formulierungen die in einfachen technologischen Abläufen zu einmalschaltbaren Displays verarbeitet werden können.

Gegenstand der Erfindung und Lösung der Aufgabe ist eine elektrochrome bistabil schaltbare Formulierung, die ein oder mehrere kathodisch schaltbare Elektrochrome umfasst, sowie zumindest einen anodisch schaltbaren Gegenspieler mit der folgenden Struktur **I** 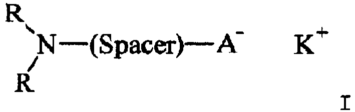 wobei **"Spacer"** für eine Alkylengruppierung mit bis zu 18 C-Atomen, bevorzugt im Bereich von 2 bis 6 C-Atomen und insbesondere mit **4** C-Atomen steht,
**R** ausgewählt ist aus der Gruppe umfassend Alkyl- und/oder Hydroxyalkylreste mit 2 bis 10 Kohlenstoffatomen, Phenyl-, p-Tolyl-, m-Tolyl-, und/oder Mesitylreste, geeignete Reste für die Ausbildung von Dimeren und Polymeren, also Reste, die ihrerseits noch eine freie Valenz haben, sowie geeignete Reste für eine Verbrückung der Reste **R,** so dass die beiden Reste **R** zweizähnig am Stickstoff anbinden, insbesondere -Alkylen- mit bis zu 10 Kohlenstoffatomen in der Kette, bevorzugt mit 2 bis 6 C-Atomen,
**A⁻** ein Anion, beispielsweise -SO₃⁻, -COO⁻, -O⁻ ist,
und
**K⁺** ein Kation, beispielsweise Alkaliion, Ammoniumion oder ein beliebig substituiertes Alkylammoniumion ist,
sowie
ein Weißpigment und ein Dispergiermittel, welches zumindest teilvernetzt werden kann.

Zum Ladungsausgleich in einem elektrochromen System braucht man beim Einsatz einer kathodisch schaltbaren, also reduzierbaren, farbgebenden Komponente immer auch eine Verbindung, die oxidiert werden kann, den so genannten anodischen Gegenspieler in der Formulierung.

Es wurde gefunden, dass die Amine der Struktur **I** als bistabile Gegenspieler (Oxidationsmaterialien) genutzt werden können, die bei der Oxidation zu Radikalkationen sofort weiter zu Hydraziniumsalzen dimerisieren. Diese sind nun nicht mehr in der Lage das abgegebene Elektron, das zur farbgebenden Reduktion der kathodischen Seite benötigt wurde wieder zurückzunehmen, weil die dimere Form so stabil ist. Deshalb bleibt die einmal geschaltete Farbe des Displays/der Anzeige stromlos erhalten. Durch anodische Oxidation wird am Stickstoffatom der Struktur **I** ein Aminradikal gebildet, das dann sofort und irreversibel zum Hydrazinium dimerisiert.

Die Oxidation findet beispielsweise bei einer Schaltspannung zwischen 0,7 und 3,7 V, insbesondere zwischen 1,0 und 3V, abhängig vom Oxidationspotential des Amins, statt.

Kathodisch schaltbare elektrochrome Farbsysteme sind alle Systeme, die an der Kathode Elektronen aufnehmen können, z.B. 4,4' Bipyridinium und alle substituierten Formen davon. Beispiele kathodischer Elektrochrome sind insbesondere alle Verbindungen, die unter Aufnahme eines Elektrons an der Kathode in eine radikalionische oder radikalische Spezies unter Änderung des Farbeindruckes übergehen:

Zwei typische Vertreter solcher Verbindungen mit jeweils einem Beispiel sollen genannt werden; alle N,N'-disubstituierten salzartigen Derivate von Bipyridinen, wie Poly-dodecylen-4,4'-bipyridinium-dibromid und alle N,N'-disubstitierten salzartigen Derivate des 2,5-Di(pyridin-4-yl) pyrimidin, wie N,N'-Diheptyl-2,5-pyrimidinylen-di-4-pyridinium-dibromid.

Als Dispergiermittel, das zumindest teilvernetzt werden kann, wird beispielsweise ein Glykol, bevorzugt Diethylenglycol, eingesetzt.

Unter Bistabilität wird das Phänomen verstanden, dass die Displays oder Anzeigen, die in einer bestimmten Farbe bzw. weiß aussehend vorliegen, durch einen Gleichstromimpuls in den geschalteten, anders farbigen oder schwarz erscheinenden Zustand gelangen, in dem sie stromlos unverändert bleiben. Displays dieser Art können über unbestimmte Zeit ohne weiteren Energieaufwand beispielsweise bestimmte Messparameter anzeigen.

Das Weißpigment dient als Bildhintergrund (Sichtsperre). Dabei wird beispielsweise und bevorzugt Titandioxid eingesetzt. Andere Weißpigmente sind selbstverständlich auch verwendbar, solange sie Verarbeitbarkeit und Stabilität der Formulierung nicht verschlechtern.

### Ausführungsbeispiele

### 1 Herstellung des Oxidationsmaterials:

### 1.1 1-(Di-p-tolyl-amino)-butan-4-sulfonat-Lithiumsalz

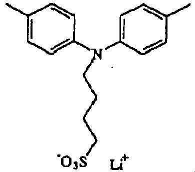

mp: 300-305°C zers.

Di-p-tolylamin wird mit Butansulton im stöchiometrischen Verhältnis in Acetonitril gelöst und 6h am Rückfluss umgesetzt. Das gebildete betainische Additionsprodukt wird mit Ether vollständig gefällt und abgesaugt, danach in Methanol gelöst und mit LDA neutralisiert. Erneut wird das gebildete Lithium-1-(di-p-tolyl-amino)-butan-4-sulfonat mittels Ether gefällt und abgesaugt. Ausbeute nahe quantitativ.

### 3

### 1.2 1-(Polyethylenamino)-butan-4-sulfonat- Natriumsalz

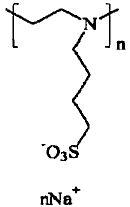

mp: 193-210°C

Polyethylenimin (n: ca. 300) wird mit Butansulton im stöchiometrischen Verhältnis in Acetonitril und Ethanol 1/1 gelöst und 6h am Rückfluss umgesetzt.

Das gebildete polymere betainische Additionsprodukt wird mit Ether vollständig gefällt und abgesaugt, danach in Wasser gelöst und mit NaOH neutralisiert. Das gebildete 1-(Polyethylenamino)-butan-4-sulfonat- Natriumsalz wird am Rotationsverdampfer zur Trockene eingeengt, danach in wenig heißem Methanol gelöst und mit Ether gefällt und abgesaugt. Ausbeute nahe quantitativ.

### 1.3 1-(Diethanolamino)-butan-4-sulfonat- Natriumsalz

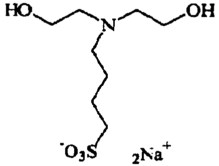

mp: 135-140°C

Diethanolamin wird mit Butansulton im stöchiometrischen Verhältnis in Acetonitril gelöst und 6h am Rückfluss umgesetzt. Das gebildete betainische Additionsprodukt wird mit Ether vollständig gefällt und abgesaugt, danach in Wasser gelöst und mit NaOH neutralisiert. Das gebildete Natrium- wird am Rotationsverdampfer zur Trockene eingeengt, danach in wenig heißem Methanol gelöst und mit Ether gefällt und abgesaugt. Ausbeute nahe quantitativ.

### 1.4 Piperazin-N,N'-dibutansulfonat Natriumsalz

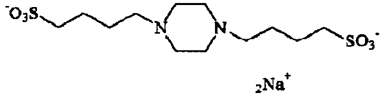

mp: 270-275°C

Piperazin wird mit Butansulton im stöchiometrischen Verhältnis in Acetonitril gelöst und 6h am Rückfluss umgesetzt.

Das gebildete betainische Additionsprodukt wird mit Ether vollständig gefällt und abgesaugt, danach in Wasser gelöst und mit NaOH neutralisiert. Das gebildete Piperazin-N,N'-dibutansulfonat Natriumsalz wird am Rotationsverdampfer zur Trockene eingeengt, danach in wenig heißem Methanol gelöst und mit Ether gefällt und abgesaugt. Ausbeute nahe quantitativ.

2 Herstellung einer elektrochrom aktiven Formulierung und einer elektrochromen Zelle für ein elektrochromes organisches Bauteil daraus.

2.1 3g Titandioxid werden mit 0.3g Poly-(dodecylen-4,4'-bipyridinium-dibromid) und 0.21g 1-(Di-p-tolyl-amino)-butan-4-sulfonat-Lithiumsalz mittels eines Speedmixers in 2g Diethylenglykol dispergiert. Es wird eine weiße Paste erhalten. Diese wird mittels der Rakeltechnik auf eine erste ITO-beschichtete PET-Folie aufgebracht. Eine zweite, als Gegenelektrode fungierende ITO-beschichtete PET-Folie wird als Gegenelektrode mittels eines doppelseitigen Klebeband-Rahmens mit der ersten Elektrode verklebt. Beim Anlegen einer Gleichspannung von 3V für eine Minute wird ein tiefblauer Farbeindruck erzeugt. Beispielsweise werden nach 12 Tagen (in Klammer die Ausgangswerte) die folgenden Lab-Werte gemessen (GretagMcBeth Eye One): L = 10(10), a = 2.5 (1), b = 5 (5).

2.2. 6g Titandioxid werden mit 0.6g Poly-(dodecylen-4,4'-bipyridinium-dibromid) und 0.25g 1-(Polyethylenamino)-butan-4-sulfonat- Natriumsalz mittels eines Speedmixers in 2g Diethylenglykol dispergiert. Es wird eine weiße Paste erhalten. Diese wird mittels der Rakeltechnik auf eine erste ITO-beschichtete PET-Folie aufgebracht. Eine zweite, als Gegenelektrode fungierende ITO-beschichtete PET-Folie wird als Gegenelektrode mittels eines doppelseitigen Klebeband-Rahmens mit der ersten Elektrode verklebt. Beim Anlegen einer Gleichspannung von 3V für eine Minute wird ein tiefblauer Farbeindruck erzeugt. Beispielsweise werden nach 12 Tagen (in Klammer die Ausgangswerte) die folgenden Lab-Werte gemessen (GretagMcBeth Eye One): L = 28(18), a = 4.5 (4), b = -21 (-29).

2.3. 6g Titandioxid werden mit 0.6g Poly-(dodecylen-4,4'-bipyridinium-dibromid) und 0.32g 1-(Diethanolamino)-butan-4-sulfonat- Natriumsalz mittels eines Speedmixers in 2g Diethylenglykol dispergiert. Es wird eine weiße Paste erhalten. Diese wird mittels der Rakeltechnik auf eine erste ITO-beschichtete PET-Folie aufgebracht. Eine zweite, als Gegenelektrode fungierende ITO-beschichtete PET-Folie wird als Gegenelektrode mittels eines doppelseitigen Klebeband-Rahmens mit der ersten Elektrode verklebt. Beim Anlegen einer Gleichspannung von 3V für eine Minute wird ein tiefblauer Farbeindruck erzeugt. Beispielsweise werden nach 12 Tagen (in Klammer die Ausgangswerte) die folgenden Lab-Werte gemessen (GretagMcBeth Eye One): L = 38(20), a = 6 (12), b = -22 (-22).

2.4. 6g Titandioxid werden mit 0.6g Poly-(dodecylen-4,4'-bipyridinium-dibromid) und 0.49g Piperazin-N,N'-dibutansulfonat Natriumsalz mittels eines Speedmixers in 2g Diethylenglykol dispergiert. Es wird eine weiße Paste erhalten. Diese wird mittels der Rakeltechnik auf eine erste ITO-beschichtete PET-Folie aufgebracht. Eine zweite, als Gegenelektrode fungierende ITO-beschichtete PET-Folie wird als Gegenelektrode mittels eines doppelseitigen Klebeband-Rahmens mit der ersten Elektrode verklebt. Beim Anlegen einer Gleichspannung von 3V für eine Minute wird ein tiefblauer Farbeindruck erzeugt. Beispielsweise werden nach 12 Tagen (in Klammer die Ausgangswerte) die folgenden Lab-Werte gemessen (GretagMcBeth Eye One): L = 31(20), a = 2.5 (4), b = -29 (-20).

Es handelt sich bei der Erfindung um eine elektrochrome Formulierung, die in einem einmal geschalteten Zustand stromlos verbleibt. Die Formulierung betrifft beispielsweise die Herstellung von Zustandsanzeigen, deren geschalteter Zustand möglichst lange stromlos erhalten bleibt. Diese elektrochromen organisch basierten Formulierungen zeichnen sich dadurch aus, dass ein oder mehrere beliebige kathodisch (farbgebende) schaltbare elektrochrome Farbsysteme in der Formulierung enthalten sind, sowie ein neuartiger anodisch schaltbarer Gegenspieler mit einem Amin, das durch Abgabe eines Elektrons zu einem Hydraziniumsalzen dimerisiert. Titandioxid wird als Bildhintergrund (Sichtsperre) und des Weiteren noch ein Dispergiermittel, welches auch vernetzt oder teilvernetzt werden kann, eingesetzt.

## Patentansprüche

1. Elektrochrom bistabil schaltbare Formulierung, die ein oder mehrere kathodisch schaltbare elektrochrome Farbsysteme umfasst, sowie zumindest einen anodisch schaltbaren Gegenspieler, **dadurch gekennzeichnet, dass** die Formulierung in stromlosem Zustand entweder weiß oder farbig bleibt, also irreversibel schaltbar ist, wobei der anodisch schaltbare Gegenspieler folgende Struktur **I** hat 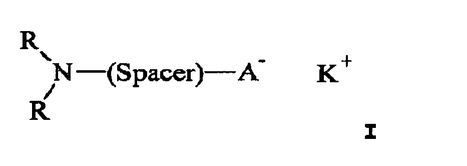 bei der
**"Spacer"** für eine Alkylengruppierung mit bis zu 18 C-Atomen, bevorzugt im Bereich von 2 bis 6 C-Atomen und insbesondere mit 4 C-Atomen steht,
**R** ausgewählt ist aus der Gruppe umfassend Alkyl- und/oder Hydroxyalkylreste mit 2 bis 10 Kohlenstoffatomen, Phenyl-, p-Tolyl-, m-Tolyl-, und/oder Mesitylreste, geeignete Reste für die Ausbildung von Dimeren und Polymeren, also Reste, die ihrerseits noch eine freie Valenz haben, sowie geeignete Reste für eine Verbrückung der Reste **R,** so dass die beiden Reste **R** zweizähnig am Stickstoff anbinden, insbesondere - Alkylen- mit bis zu 10 Kohlenstoffatomen in der Kette, bevorzugt mit 2 bis 6 C-Atomen,
**A⁻** ein Anion, beispielsweise -SO₃⁻, -COO⁻, -O⁻ ist,
und **K⁺** ein Kation, beispielsweise Alkaliion, Ammoniumion oder ein beliebig substituiertes Alkylammoniumion ist,
sowie
ein Weißpigment und ein Dispergiermittel, welches zumindest teilvernetzt werden kann.

2. Formulierung nach Anspruch 1, wobei das kathodisch schaltbare elektrochrome Farbsystem eine 4,4'Bipyridinium-Verbindung oder eine substituierte Formen davon ist.

3. Formulierung nach Anspruch 1 oder 2, wobei das kathodisch schaltbare elektrochrome Farbsystem ausgewählt ist aus der Gruppe folgender Verbindungen: alle N,N'-disubstituierten salzartigen Derivate von Bipyridinen, wie Poly-dodecylen-4,4'-bipyridinium-dibromid und alle N,N'-disubstitierten salzartigen Derivate des 2,5-Di(pyridin-4-yl)pyrimidin, wie N,N'-Diheptyl-2,5-pyrimidinylen-di-4-pyridinium-dibromid.

4. Formulierung nach einem der vorstehenden Ansprüche, wobei als Weißpigment Titandioxid eingesetzt wird.

5. Formulierung nach einem der vorstehenden Ansprüche, wobei als Dispergiermittel ein Glykol eingesetzt wird.

6. Verfahren zur Herstellung einer Formulierung nach einem der vorstehenden Ansprüche, wobei das Weißpigment mit den anodisch und kathodisch schaltbaren elektrochromen Systemen in einem Dispergiermittel mittels eines Speed-Mixers gemischt werden, so dass eine Paste mit einer Viskosität entsteht, die durch Rakeltechnik verarbeitbar ist.

7. Elektrochromes organisches Bauteil, zumindest zwei Elektroden mit dazwischen einer elektrochromen Formulierung nach einem der Ansprüche 1 bis 5 umfassend.

## Claims

1. Bistably switchable electrochromic formulation comprising one or more cathodically switchable electrochromic colour systems as well as at least one anodically switchable antagonist, **characterised in that** in the currentless state the formulation remains either white or coloured, i.e. is irreversibly switchable, with the anodically switchable antagonist having the following structure **I** 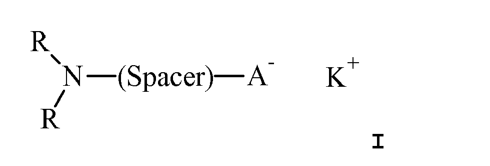 where
**"Spacer"** stands for an alkene grouping with up to 18 C atoms, preferably in the range from 2 to 6 C atoms and in particular with 4 C atoms,
**R** is selected from the group comprising alkyl and/or hydroxyalkyl residues with 2 to 10 carbon atoms, phenyl, p-tolyl, m-tolyl and/or mesityl residues, residues suitable for forming dimers and polymers, i.e. residues which for their part still have a free valence, as well as residues suitable for crosslinking the residues **R,** such that the two residues **R** bind in a bidentate manner to the nitrogen, in particular -alkene- with up to 10 carbon atoms in the chain, preferably with 2 to 6 C atoms,
**A⁻** is an anion, for example -SO₃⁻, -COO⁻, -O⁻,
and
**K⁺** is a cation, for example an alkali ion, an ammonium ion or an arbitrarily substituted alkyl ammonium ion,
as well as
a white pigment and a dispersing agent which can be at least partly crosslinked.

2. Formulation according to claim 1, wherein the cathodically switchable electrochromic colour system is a 4,4'-bipyridinium compound or a substituted form thereof.

3. Formulation according to claim 1 or 2, wherein the cathodically switchable electrochromic colour system is selected from the group of the following compounds: all N,N'-disubstituted saline derivatives of bipyridines, such as poly-dodecylene-4,4'-bipyridinium-dibromide and all N,N'-disubstituted saline derivatives of the 2,5-di(pyridine-4-yl)pyrimidine, such as N,N'-diheptyl-2,5-pyrimidinylene-di-4-pyridinium-dibromide.

4. Formulation according to one of the preceding claims, wherein titanium dioxide is used as the white pigment.

5. Formulation according to one of the preceding claims, wherein a glycol is used as the dispersing agent.

6. Method for producing a formulation according to one of the preceding claims, wherein the white pigment is mixed with the anodically and cathodically switchable electrochromic systems in a dispersing agent using a speed mixer, such that a paste is produced having a viscosity which can be processed by means of doctor blade technology.

7. Organic electrochromic component comprising at least two electrodes having an electrochromic formulation according to one of claims 1 to 5 sandwiched therebetween.

## Revendications

1. Formulation électrochrome bistable commutable, qui comprend un ou plusieurs systèmes chromatiques électrochromes qui peuvent être commutés de façon cathodique, ainsi qu'au moins un antagoniste pouvant être commuté de façon anodique, **caractérisée en ce que** la formulation reste blanche ou colorée à l'état sans courant, c'est-à-dire est commutable de manière irréversible, l'antagoniste pouvant être commuté de façon anodique présentant la structure I suivante 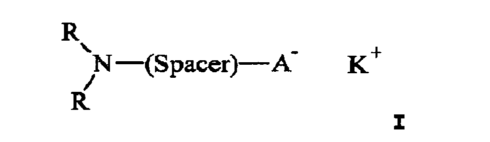 dans laquelle
"Spacer" représente un groupe alkylène comprenant jusqu'à 18 atomes de carbone, de préférence dans la plage de 2 à 6 atomes de carbone et en particulier 4 atomes de carbone,
R est choisi dans le groupe comprenant les radicaux alkyle et/ou hydroxyalkyle comprenant 2 à 10 atomes de carbone, les radicaux phényle, p-toluyle, m-toluyle et/ou mésityle, des radicaux appropriés pour la formation de dimères et de polymères, c'est-à-dire de radicaux qui présentent à leur tour encore une valence libre ainsi que des radicaux appropriés pour un pontage des radicaux R, de telle sorte que les deux radicaux R se lient de manière bidentate à l'azote, en particulier -alkylène- comprenant jusqu'à 10 atomes de carbone dans la chaîne, de préférence 2 à 6 atomes de carbone,
A⁻ représente un anion, par exemple -SO₃⁻, -COO⁻, -O⁻, et
K⁺ représente un cation, par exemple un ion de métal alcalin, un ion d'ammonium ou un ion d'alkylammonium substitué de manière quelconque,
ainsi que un pigment blanc et un dispersant, qui peut être au moins partiellement réticulé.

2. Formulation selon la revendication 1, le système chromatique électrochrome pouvant être commuté de façon cathodique étant un composé de 4,4'-bipyridinium ou une forme substituée de celui-ci.

3. Formulation selon la revendication 1 ou 2, le système chromatique électrochrome pouvant être commuté de façon cathodique étant choisi dans le groupe des composés suivants : tous les dérivés de type sel, N,N'-disubstitués de bipyridines, tels que le dibromure de polydodécylène-4,4'-bipyridinium et tous les dérivés de type sel N,N'-disubstitués de la 2,5-di(pyridin-4-yl)pyrimidine, tels que le dibromure de N,N'-diheptyl-2,5-pyrimidinylène-di-4-pyridinium.

4. Formulation selon l'une quelconque des revendications précédentes, du dioxyde de titane étant utilisé comme pigment blanc.

5. Formulation selon l'une quelconque des revendications précédentes, un glycol étant utilisé comme dispersant.

6. Procédé pour la préparation d'une formulation selon l'une quelconque des revendications précédentes, le pigment blanc étant mélangé avec les systèmes électrochromes pouvant être commutés de façon anodique et cathodique dans un dispersant au moyen d'un mélangeur à vitesse élevée, de telle sorte qu'il se forme une pâte présentant une viscosité qui peut être transformée par une technique de raclage.

7. Composant organique électrochrome, comprenant au moins deux électrodes présentant, entre elles, une formulation électrochrome selon l'une quelconque des revendications 1 à 5.
